# EUROPEAN PATENT APPLICATION

(11) **EP 4 668 166 A1**
(43) Date of publication of application: **24.12.2025**
(21) Application number: 24183748.3
(22) Date of filing: 21.06.2024
(51) Int. Cl.: G06N 3/092

(54) **MULTI-MODAL SENSOR FUSION UTILIZING NATURAL LANGUAGE FOR HMI AGENT SYSTEMS**

(71) Applicant: AUMOVIO Germany GmbH, 60488 Frankfurt am Main (DE)
(72) Inventor: Bhalla, Aditi, 30175 Hannover (DE); Dr. Hellert, Christian, 30175 Hannover (DE); Hota, Rudra Narayan, 30175 Hannover (DE)
(74) Representative: Aumovio Corporation

(57) **Abstract**

The invention proposes a computer-implemented method for operating an HMI system (16), the method comprising:
a) monitoring a user with a multi-modal sensor arrangement (20) to obtain multi-modal sensor data (30) that are indicative of a user state;
b) feeding the multi-modal sensor data (30) to a user state estimation module (32), wherein the user state estimation module (32) processes the multi-modal sensor data (30) and outputs a user state embedding (34) that represents a natural language description of the user state or the natural language description of the user state;
c) feeding the result of step b) to an HMI agent (40) and a reward model (36), wherein the reward model (36) determines a reward value (38) and feeds it to the HMI agent (40), and the HMI agent (40) determines a control signal (42) that is configured to cause a modification to an HMI device (18).

## Description

### TECHNICAL FIELD

The invention relates to computer-implemented methods for operating and training HMI agent systems. Furthermore, the invention relates to an HMI system and a vehicle with such an HMI system.

### BACKGROUND

Reference is made to the following documents:
[1] WO 2018 / 122 729 A2
[2] WO 2020 / 054 618 A1
[3] EP 3 831 636 A2
[4] US 2020 / 0 269 865 A1
[5] WO 2016 / 005 289 A1
[6] L. Mou, et al., "Driver stress detection via multimodal fusion using attention-based CNN-LSTM", Expert Systems with Applications, 173, p. 114693, 2021
[7] A. Roitberg, et al., "A Comparative Analysis of Decision-Level Fusion for Multimodal Driver Behaviour Understanding", 2022 IEEE Intelligent Vehicles Symposium (IV), pp. 1438-1444, June 2022
[8] S. Al-Sultan, et al., "Context-aware driver behavior detection system in intelligent transportation systems", IEEE transactions on vehicular technology, 62(9), pp.4264-4275, 2013
[9] K. Murugesan, et al., "Text-based RL Agents With Commonsense Knowledge: New Challenges, Environments And Baselines", In Proceedings of the AAAI Conference on Artificial Intelligence, vol. 35, no. 10, pp. 9018-9027, May 2021
[10] EP 1 914 106 A2
[11] Srivastava, Shashank, Igor Labutov, and Tom Mitchell, "Zero-shot learning of classifiers from natural language quantification.", Proceedings of the 56th Annual Meeting of the Association for Computational Linguistics (Volume 1: Long Papers), 2018
[12] WO 2021 / 234 632 A1
[13] US 2023 / 0 146 013 A1
[14] US 11 648 935 B2
[15] WO 2020 / 023 746 A2
[16] DE 10 2017 214 542 A1
[17] US 2022 / 0 204 020 A1

In the field of vehicle occupant monitoring, especially for partially and fully automated vehicles, there are a wide variety of systems and methods to record the current condition of an occupant, e.g., a driver, and to ensure that he/she behaves appropriately. In [10], a driver is continuously observed, and the current state of attention is recorded. If the attention for the driving task is too low, then measures are taken to draw attention back to the driving task or assistance functions are switched off. But also, more user-oriented systems that are dealing with empathy and emotions are existing [1]. Furthermore, there are also HMI systems that try to regulate the emotions of an occupant to increase safety and comfort [3].

In many works, sensor measurements are used that are represented as state features. Such state features are predefined using prior knowledge about the domain or experimental tests. In [1], an emotion recognition model with different state features (e.g. face, skin) was used to adapt the human-machine interaction system. Thereby, interactions can be used for awakening the driver [2] using physical states of the driver. Furthermore, in [4] strong emotions are used to adapt the interactions based on the past observations. But not only emotions are used, but also other states are utilized like activity or stress, to control the workload and comfort of the user [5], so that the user accepts the system behavior and therefore increases the trust into the system. As descripted, most systems use concrete states (e.g., activities or emotions) to model the environment, but there are also approaches in the robotic domain that used text representations together with reinforcement learning [9] to learn natural interactions between humans and robots.

On the sensor side, often single modalities (e.g., a camera) are utilized, but there are also approaches that uses a multi-modal sensor setup. For example, a system for driver stress detection [6] used a multi-modal framework based on deep neural networks (DNNs). There is typically a distinguishment between late fusion, such as fusing the results from different driver activity models [7], and low-level fusion, such as fusing raw sensor data [8].

Some methods are also using sequence encodings to predict future states of the HMI system, including future states of the human driver. In both [12] and [13], the notification of action or interaction using an interface is based on the future object representation with contextual information. This is done with considering past observations and prediction of future state of the objects. The work in [14] is also very similar to the previous ones, with probabilistically estimated future state of each road user and collision estimation. It generates a driver warning signal or executes an avoidance action if the risk of collision exceeds a predetermined threshold. With predicted driver behavior in [15], it learns the model from the difference from ideal behavior. It mainly focuses on driving efficiency and performance.

Many systems in the domain of Human-Machine Interaction are using strategies to adapt the system to the user, which is also called personalization. Thereby, driver models are used [16], which are created using distributions from a reference dataset to model the behavior of a driver with respect to the parameters included in that reference dataset. In [16] the focus is on driving style behavior adaptation. Another patent [17] in this direction is learning driver behavior from a dataset by training a generative model. This generative model can then be used to simulate driver style behavior.

### SUMMARY OF THE INVENTION

It is the object of the invention to provide an improved HMI system, preferably for vehicles. The object is achieved by the subject-matter of the independent claims. Preferred embodiments are subject-matter of the dependent claims.

The invention provides a computer-implemented method for operating an HMI system, the method comprising:
a) monitoring a user with a multi-modal sensor arrangement to obtain multi-modal sensor data that are indicative of a user state;
b) feeding the multi-modal sensor data to a user state estimation module, wherein the user state estimation module processes the multi-modal sensor data and outputs a user state embedding that represents a natural language description of the user state or the natural language description of the user state;
c) feeding the result of step b) to an HMI agent and a reward model, wherein the reward model determines a reward value and feeds it to the HMI agent, and the HMI agent determines a control signal that is configured to cause a modification to an HMI device.

With the textual approach specialized models that are conventionally used in multi-modal early fusion to deal with different modalities can be avoided. This can significantly reduce engineering effort at development time and computational effort at inference time. Furthermore, it is possible to have an agent based interaction between human and vehicle using text/natural language. This allows users to change the HMI system directly via text/speech to adapt to their needs. As a result, overall safety can be increase, as the human-vehicle interaction can occur more naturally and with less distraction, especially in case of the driver.

Preferably, the method further comprises the step d) feeding the control signal to the HMI device, and in response to receiving the control signal the HMI device modifies at least one HMI element. The HMI elements can be control elements that can be interacted with by the user, such as buttons, sliders and similar UI elements. The HMI elements may also be indicating elements that inform the user of certain conditions, in particular about the user's physical and/or emotional state that may affect driving behavior.

Preferably, the multi-modal sensor arrangement includes a plurality of different sensors that are chosen from a group consisting of an imaging device, such as an RGB camera and/or IR camera, an audio sensor, such as a microphone, and a radar sensor, such as an ultra-wideband sensor. Imaging devices can be used to obtain data that are relevant to user attention, user movements and level compliant behavior. Audio sensors may be used to determine the general situation within the vehicle cabin and specifically can be used to interact with the HMI agent, in particular in setting a new goal, e.g., switch the radio to a certain station.

Preferably, in step b) the user state estimation module includes a transformer-based machine learning model that is trained to output the user state embedding or the natural language description based the multi-modal sensor data, preferably based on a sequence of samples of the multi-modal sensor data. Visual transformers are particularly suitable to generate a natural language description of visual data. As transformers in general are known to be suitable for sequential data, it is possible to consider temporal aspects to improve representation of sequence encoded information. This allows also to consider historical patterns of the user resulting in an improved prediction by the HMI agent.

Preferably, in step b) the user state estimation module generates a text embedding or text for each modality in the multi-modal sensor data, and fuses the text embeddings or texts to obtain the user state embedding or the natural language description. With this modular approacht, it is possibe to further reduce engineering complexity during development time and computational effort at inference time.

Preferably, in step c) the reward model is trained as a classification model that classifies the user state embedding or the natural language description and based on the result of the classification determines the reward value to be fed to the HMI agent. Due to the richer input data the reward model is structured to break down the huge number of (more or less) synonymous possibilities for describing a particular scene into predetermined classes. With this the natural language approach can be used and at the same time the outcomes are suitably deterministic for generating control signals with sufficient confidence.

Preferably, in step c) the HMI agent predicts a user action from the user state embedding or the natural language dscription, wherein the HMI agent determines the control signal based on the predicted user action, and the control signal is configured to modify the HMI device such that the next user interaction between the user and the HMI device takes a shorter time period or fewer actions by the user. The predicted user action is based on the output of the user state estimation module and gives the most likely action that the user is goint to take. In case the next user action is a user interaction with the HMI device, the control signal modifies the HMI device to make it easier for the user to achieve his goal with the HMI device. This can be done by moving HMI elements to another menu level, highlighting them, or modifying the HMI device to automatically switch to a menu that is the most suitable for the predicted user action.

Preferably, the reward model is trained as a binary classification model that classifies the user state embedding or the natural language description. This approach can be beneficial for monitoring for level compliant behavior of the user. Whatever the user action it can be classified into "desired" and "undesired" and the HMI system can react to push the user towards desired, e.g., level compliant behavior. This may involve warning messages, such as "hands not on the wheel", "phone use during driving", "you should take a break", etc.

Preferably, the reward model is trained as a score classification model that classifies the user state embedding into a predetermined and at inference time fixed number of classes by determining a classification score of the user state embedding for each of the classes, wherein the reward value is based on at least one classification score. This approach can generally be used to, for example, show certain HMI elements that are used more often in a more prominent manner such that the user has easier and - more importantly - less distracting access to them.

Preferably, the reward model includes a fully connected neural network that has an input layer, one to three hidden layers, and an output layer, wherein the input layer has one input neuron associated with each dimension of the user state embedding and receives a value of that dimension, wherein the sum total of all hidden neurons is greater than the number of input neurons, wherein the output layer has one output neuron for each of the predetermined classes, and optionally the classification scores are normalized with a softmax function. With this approach, a small efficient and reliably reward model can be implemented. This can reduce computational power requirements and time requirements at inference time.

Preferably, in step c) and/or in step d) the HMI agent modifies the HMI device by adding to, removing from, and/or changing of the HMI element, preferably a control element, of the user interface. The HMI agent basically makes a prediction, what the user is trying to do with the HMI device and in anticipation of a certain action by the user adapts the HMI elements to make it easier for the user to perform her interaction. This can be based on ergonomic considerations, for example.

Preferably, the HMI agent determines the modification action based on a proximal policy optimization (PPO). PPO is an efficient way of predicting the action of the user.

The invention provides an HMI system, preferably for a vehicle, the HMI system comprising means to carry out a preferred method.

The invention provides a computer-implemented method for training an HMI agent and a reward model before deployment in an HMI system, the method comprising:
a) providing a plurality of samples of multi-modal sensor data, each sample being indicative of a user state within the vehicle cabin;
b) training at least one sequence-to-text model or sample-to-text model to be suitable to determine a natural text description or an embedding thereof from the samples or a sequence of samples of multi-modal sensor data provided in step a);
c) generating a natural language text label for each sample or sequence of samples with the models trained in step b), wherein the caption is descriptive of the respective samples or sequence of samples;
d) training a reward model with supervised learning using the natural language text labels;
e) train the HMI agent with reinforcement learning, wherein the reward model determines the reward of the HMI agent during reinforcement learning;
f) deploy the trained HMI agent and trained reward model to the HMI system.

Preferably, in step c) at least one additional natural language text label, that has different text than all other labels, is generated with a large language model for at least one sample or sequence of samples.

The invention provides a method for finetuning, preferably for personalizing to a specific user, an HMI agent and a reward model during deployment in an HMI system, the method comprising:
a) detecting and processing a user interaction of the user with the HMI system and associated multi-modal sensor data about the user;
b) performing a preferred operating method with the HMI system to determine the control signal and storing the user interaction, multi-modal sensor data, and a modification action represented by the control signal;
c) if a predetermined update criterion is met, performing training of the reward model based on the stored user interaction, the multi-modal sensor data, and the modification action to obtain an updated reward model, and perform reinforcement learning of the HMI agent based on the updated reward model to obtain an updated HMI agent.

Preferably, steps a) and b) are carried out by a control unit, preferably an embedded control unit, of a vehicle, and step b) involves connecting the control unit to a cloud server via a communications network and sending the data required for training to the cloud server. Preferably, step c) is carried out by the cloud server in response to and based on the data received from the control unit. Preferably, the cloud server transmits the updated reward model and the updated HMI agent to the control unit via the communications network to replace the reward model and HMI agent. With this approach, the finetuning can be done on a computationally more powerful machine compared to the usual embedded systems installed in vehicles.

Preferably, after obtaining the updated reward model and/or the updated HMI agent an integrity check is performed and, only if the integrity check is passed, the updated reward model and the HMI agent replace the previous ones. The integrity check can involve a validation dataset that is used to check the predictions of the updated HMI agent against desired predictions. Furthermore, the integrity check may enforce that unchangeable goals are not affected by the update.

The invention provides a vehicle comprising a preferred HMI system preferably configured for performing a preferred method.

The invention provides a computer program comprising instructions that, upon execution by a data processing device, cause the device to carry out a preferred method

The invention provides a machine readable data storage that has stored there on the computer program.

In some embodiments a user in a vehicle cabin is perceived by sensors yielding into multi-modal sensor data. This data is preferably processed by user state estimation modules to obtain a textual description of the scene represented by the given multi-modal sensor data. The textual description is typically represented in an embedding. The textual state can then be processed by the HMI agent's goal. A trained reward model is used to obtain a reward value. The reward value together with the state is the input of the HMI agent, which predicts HMI interactions. The interactions can then be presented to the user, using HMI elements. Such HMI elements can be displays, lighting, audio, or speech to name only a few. The ides presented herein mainly focus on the user state estimation module, the reward model, and the HMI agent model.

To make the textual state more concrete, the following examples could be the output of the state estimation modules:
- "The driver is sitting and is monitoring the system while drinking from a bottle of water."
- "Occupant A is in a conversation with occupant B on the topic of politics."
- "The driver is falling asleep and has eyes closed."

In other words, the textual state is basically a short description of the scene that is represented by the multi-modal sensor data.

In some embodiments the sensors detect a sequence of samples and then a predetermined number, n, of those samples can be combined together and fed into a sequence-to-text model. In some embodiments the sequence-to-text model outputs a textual description of the scene represented by the sequence of samples. Typically the textual description is kept in the form of embedding data that is not human readable.

In some embodiments the next n samples are taken for the next iteration. In some embodiments a sliding window approach can be used. With that sequence sample approach a temporal description can be performed.

In some embodiments the reward model takes the scene description and outputs the reward value and the agent uses the sequence scene description as a state and the reward value to predict an action, which in this context are typically the interactions with the user, as described above. Furthermore, if there are multiple sequence-to-text models, i.e., one model for one modality combining their outputs is simplified since the outputs share the same representation. Textual representations also have the advantage that the approach is not limited to a certain selected feature set.

To train an HMI agent preferably reinforcement learning is used. Before that, however, the reward model is trained. Instead of engineering the reward function, as is typically done, here the reward function is implemented as a machine learning model that is designated as reward model. The reward model takes as input the textual description embeddings, before and after an action was applied. The reward model has a predefined set of goal statements preferably as natural text or its embedding. The reward model, thus, preferably classifies the textual description into a predetermined set of classes with which reward values can be associated.

The reward model for training the HMI agent is obtained by collecting data preferably from a multi-modal sensor setup. Then one or more sequence-to-text models are trained by supervised learning from a subset of the collected data. In some embodiments a missing scene description is generated using the models. Additionally, a large language model (LLM) can be utilized to increase the variety of the textual scene descriptions. It is also possible to adjust the system for multiple languages.

Once the multi-modal sensor data is labeled with scene descriptions, a reward model can be trained using initial rules or user input (both in text), and using supervised learning methods. Preferably, the optimization seeks to give a positive reward, if the scene description matches the goal state and negative or zero reward otherwise. When the reward model is trained, it can be used to train an HMI agent using classical reinforcement learning.

During operation of the HMI system, the provided goal statements from the training process can be adapted by the user. If a user as part of the environment describes a new goal, the goal is used to update the reward model. The goal can be described by user interaction with the HMI system, for example. Note that for some applications, some goals may be unchangeable or have higher priority due to safety reasons. For example, the system could have the goal that the user shall not fall asleep, but now the user wants to input a new goal that avoids interaction on falling asleep or getting tired. After updating the reward model the system operates normally in the way that the HMI agent gets new states and rewards and outputs actions to the environment.

Once the user has input a new goal, the system can change the state into an update process. Initially, the agent takes actions on the environment state and the current reward model as before, once the criterion is met to update the model. The criterion can be for example a rule that an update is performed after N steps or more advanced by evaluating, whether there are scene descriptions (states), that are related to the new goal statement.

Once the criterion is met, the reward model gets updated by zero-shot learning as described in [11], eventually taking into consideration the higher priority of other goal statements. Once the reward model is updated, an integrity check is performed, ensuring that the new reward model is valid. This can be for example done by ensuring that the behavior of the new model is not too far away from the previous or original one. The behavior can be checked with a predetermined and curated set of test cases, for example. Also, it can be ensured that some core goals are not harmed. Finally, the system goes back to normal operation.

In particular, advantages of the disclosed approach include:
- Usage of natural language models increases the flexibility of reinforcement learning models, especially for the case of HMI systems.
- By using a reward model instead of a reward function, the model can be updated by e.g. zero-shot learning in order to change the behavior of the HMI system for user needs. This allows a natural and convenient way to personalize the system. Furthermore, the engineering effort to create the reward function can be avoided by using the reward model together with natural language embedding or processing.
- Since natural language can also encode temporal information, an HMI system can utilize that information for predicting future states

### BRIEF DESCRIPTION OF THE DRAWINGS

Embodiments of the invention are described in more detail with reference to the accompanying schematic drawings.
Fig. 1 depicts an embodiment of a vehicle;
Fig. 2 depicts an embodiment of an operating method of an HMI system;
Fig. 3 depicts a variant of the operating method of Fig. 2; and
Fig. 4 depicts an embodiment of a training method for an HMI system;
Fig. 5 depicts an embodiment of a finetuning method for an HMI system.

### DETAILED DESCRIPTION OF EMBODIMENT

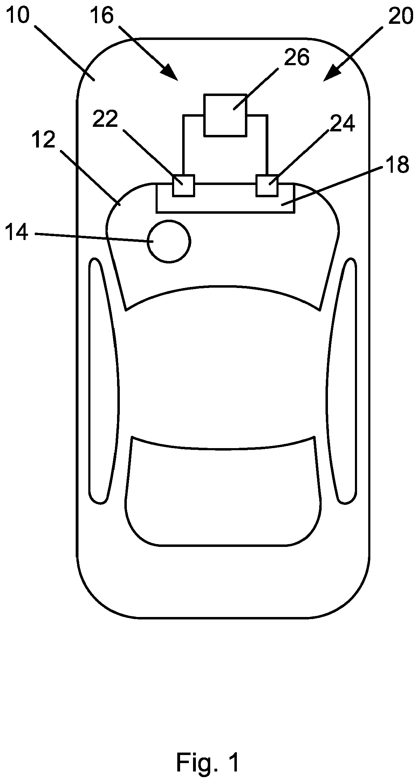

Referring to Fig. 1 a vehicle 10 is depicted. The vehicle 10 includes a vehicle cabin 12 for at least one passenger as a driver and optionally further passengers. The driver and passengers are designated as users 14.

The vehicle 10 includes an HMI system 16. The HMI system 16 has an HMI device 18, e.g., a touch display. The HMI device 18 is arranged within the vehicle cabin 12 so that it is accessible for the user 14 to operate. The HMI device 18 has a user interface that involves one or more HMI elements, such as display elements and/or control elements. The display element is configured to indicate to the user a state of the vehicle 10 or the user 14 herself. The control element is arranged to be interacted with by the user 14 and may take the form of buttons, sliders, etc.

The HMI system 16 has a multi-modal sensor arrangement 20. The multi-modal sensor arrangement 20 includes a plurality of sensors, such as an imaging device 22 and a microphone 24. The multi-modal sensor arrangement 20 is configured such that the user 14 can be monitored, in particular, if the user 14 interacts with the HMI device 18. The multi-modal sensor arrangement 20 provides multi-modal sensor data that are fused from the different sensors.

The HMI system 16 has a control unit 26 that is configured to control the HMI system 16 and is operatively coupled to the different components thereof. The control unit 26 is preferably configured as an embedded system or a special purpose computer. The control unit 26 may have a telecommunication device that is capable of connecting the control unit 26 to a server via a telecommunications network.

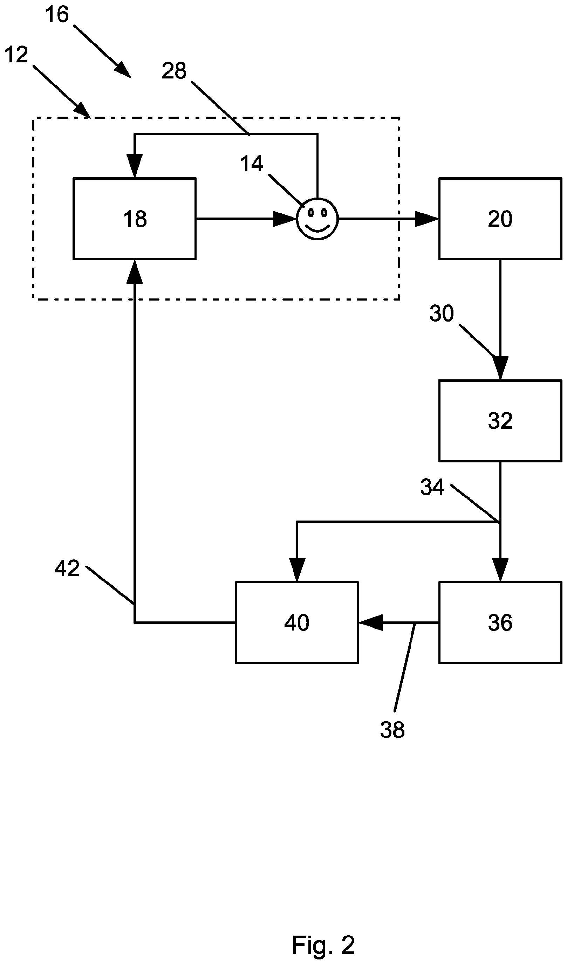

Referring to Fig. 2 a method for operating the HMI system 16 is described at inference time.

The user 14 can perform a user interaction 28 with the HMI device 18 within the vehicle cabin 12. The multi-modal sensor arrangement 20 monitors the user interaction 28 and generates multi-modal sensor data 30. The multi-modal sensor data 30 are fed to a user state estimation module 32.

The user state estimation module 32 includes a sample-to-text model, e.g., based on a visual transformer, that generates a user state embedding 34 that is representative of a natural language text description for the state of the user 14 in each sample of multi-modal sensor data 30. The user state embedding 34 may be decoded into natural language before further processing or as a check.

The user state embedding 34 is fed to a reward model 36. The reward model 36 is preferably configured as a fully connected neural network and determines a reward value 38 based on the user state embedding 34. The reward model 36 is trained as a classification model. The reward model 34 classifies the user state embedding 34 using a number of predetermined classes using a classification score. It is also possible that the reward model 34 performs binary classification. The reward value 38 is determined by the class having the highest classification score.

If the user state embedding 34 represents, for example, the description "the driver is sitting and is monitoring the system while drinking from a bottle of water" the reward model 36 classifies this as "level compliant". For the description "occupant A is in a conversation with occupant B on the topic of politics" the reward model 36 classifies this as "additional information wanted". For the description "the driver is falling asleep and has eyes closed", the reward model 36 classifies this as "dangerous". Based on these example classes the associated reward values 38 are generated.

The reward value 38 is fed to an HMI agent 40. The HMI agent 40 is trained to generate a control signal 42 for the HMI device 18 based on the user state embedding 34 and the reward value 38. For the "level compliant" example, the HMI agent 40 determines that nothing has to be done and generates the control signal 42 to maintain the HMI device 18 in its current state. For the "additional information wanted" example, the HMI agent 40 determines as a next action a change for the HMI device 18 asking for a web search. In this case, the control signal 42 is generated to ask the user 14, whether she wishes for a web search on the topic currently discussed and provides the necessary HMI elements on the HMI device 18. For the "dangerous" class, the HMI agent 40 generates a control signal 42, that causes the HMI device 18 to issue a warning message, and preferably also an acoustic and haptic warning.

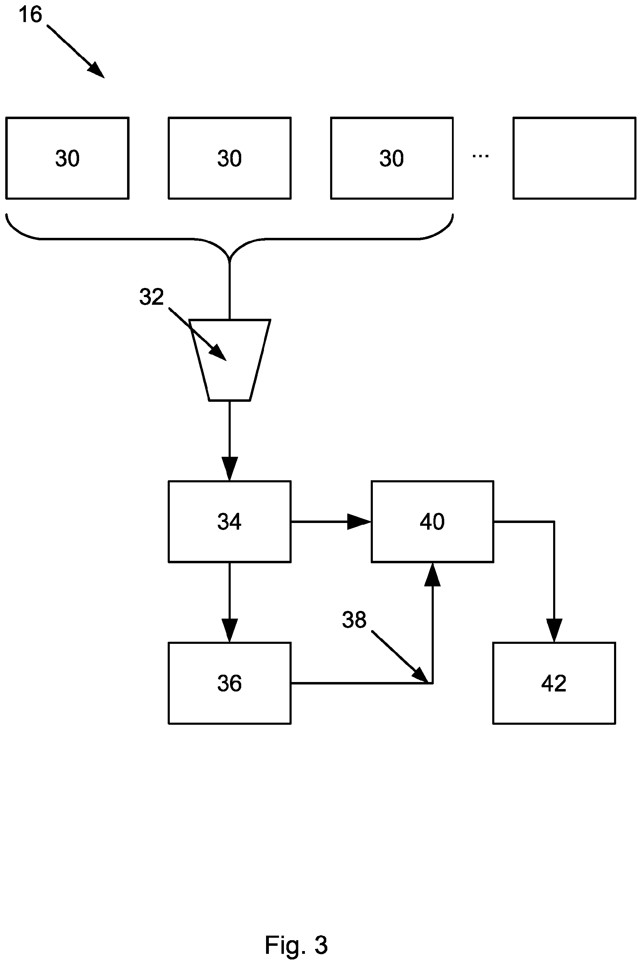

Referring to Fig. 3, a variant of the HMI system is shown, where instead of a single samples, a sequence of N samples of the multi-modal sensor data 30 is fed to the user state estimation module 32. The user state estimation module 32 includes a sequence-to-text model, e.g., based on a visual transformer, that generates the user state embedding 34 to be representative of a natural language text description for the state of the user 14 during the sequence of samples of multi-modal sensor data 30. The user state embedding 34 may be decoded into natural language before further processing or as a check. The rest of the process works as previously described.

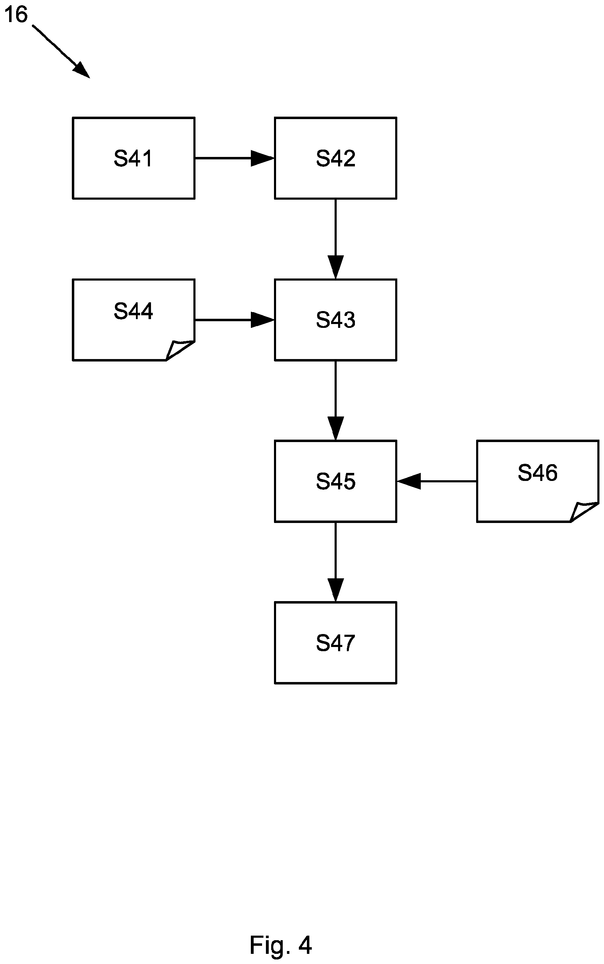

Referring to Fig. 4, a pre-deployment training of the HMI system 16 is described.

In a data collection step S41, multi-modal sensor data 30 are acquired. This can be done in a driving simulator with test subjects that perform predetermined actions, for example.

In a grounding step S42, the user state estimation module 32, specifically the sample-to-text model or the sequence-to-text model are trained by supervised learning with a subset of the multi-modal sensor data 30 acquired in the data collection step S41. Another subset can be used for validation.

In a label generation step S43, one natural language text label is generated by the models trained in the previous step for each sample or sequence. In an additional label generation step S44, using a large language model, further natural language text labels can be generated for the same respective samples or sequences.

In a reward training step S44, the reward model 36 is trained as a classification model by supervised learning, preferably zero-shot learning, with the samples and sequences labelled in the previous step. In a goal provision step S45, the predetermined classes also called goal text embedding can be provided for use the reward training step S44 by rules or the user 14. The goal contents can be stored in a database, e.g., in tabular form, preferably using libraries such as Pandas from Python. The goals can then be retrieved based on the respective task as needed.

In an agent training step S46, the HMI agent 40 is trained by reinforcement learning based on the samples or sequences and the reward model 36 trained in the reward training step S44.

This results in the trained HMI agent 40 and reward model 36 that are deployed to the HMI system 16.

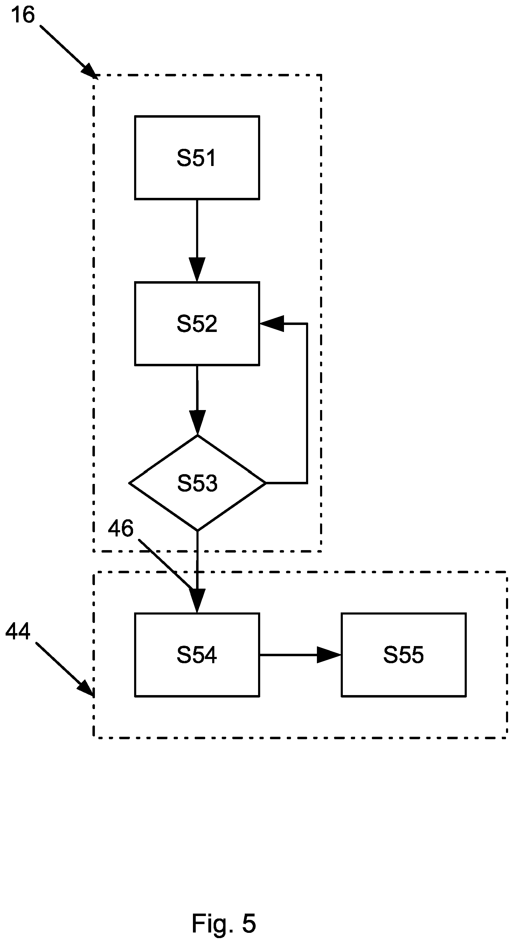

Referring to Fig. 5 a method for finetuning the HMI system 16 to the needs of the user 14 after deployment is described in more detail.

In an interaction step S51, the user 14 performs a user interaction 28 with the HMI device 18. The user interaction 28 is monitored with the multi-modal sensor arrangement 20 and the corresponding multi-modal sensor data 30 are fed to the HMI agent 40.

In a prediction step S52, the HMI agent 40 generates the control signal 42 based on the reward model 36. The data of steps S51 and S52 are stored for later use.

In an update condition step S53, the HMI system 16 checks, whether an update condition is met. The update condition is for example a threshold, i.e., if a predetermined number of user interactions 28 have been performed then the update condition is met and the update is performed. If the update condition is not met, the process goes back to step S52.

If the update condition is met, then the HMI system 16, specifically the control unit 26, connects the HMI system 16 to a cloud server 44 via a telecommunications network 46.

In an update step S54, the cloud server 44 receives or looks up the reward model 36 and the HMI agent 40 and performs the training method previously described with reference to Fig. 4 to obtain an updated reward model 36 and an updated HMI agent 40.

In an integrity check step S55, the cloud server 44 checks and validates the updated reward model 36 and the updated HMI agent 40. This may involve a validation data set. If the integrity check is passed then the updated reward model 36 and the updated HMI agent 40 are deployed to the HMI system 16 via the telecommunications network 46 and the connection is severed.

### REFERENCE SIGNS

10 vehicle
12 vehicle cabin
14 users
16 HMI system
18 HMI device
20 multi-modal sensor arrangement
22 imaging device
24 microphone
26 control unit
28 user interaction
30 multi-modal sensor data
32 user state estimation module
34 user state embedding
36 reward model
38 reward value
40 HMI agent
42 control signal
44 cloud server
46 telecommunications network

## Claims

1. A computer-implemented method for operating an HMI system (16), the method comprising:
a) monitoring a user with a multi-modal sensor arrangement (20) to obtain multi-modal sensor data (30) that are indicative of a user state;
b) feeding the multi-modal sensor data (30) to a user state estimation module (32), wherein the user state estimation module (32) processes the multi-modal sensor data (30) and outputs a user state embedding (34) that represents a natural language description of the user state or the natural language description of the user state;
c) feeding the result of step b) to an HMI agent (40) and a reward model (36), wherein the reward model (36) determines a reward value (38) and feeds it to the HMI agent (40), and the HMI agent (40) determines a control signal (42) that is configured to cause a modification to an HMI device (18).

2. The method of claim 1, further comprising the step:
d) feeding the control signal (42) to the HMI device (18), and in response to receiving the control signal (42) the HMI device (18) modifies at least one HMI element.

3. The method of any of the claims 1 or 2, wherein the multi-modal sensor arrangement (20) includes a plurality of different sensors that are chosen from a group consisting of an imaging device (22), such as an RGB camera and/or IR camera, an audio sensor, such as a microphone (24), and a radar sensor, such as an ultra-wideband sensor.

4. The method of any of the preceding claims, wherein in step b) the user state estimation module (32) includes a transformer-based machine learning model that is trained to output the user state embedding (34) or the natural language description based the multi-modal sensor data (30), preferably based on a sequence of samples of the multi-modal sensor data (30).

5. The method of any of the preceding claims, wherein in step c) the reward model (36) is trained as a classification model that classifies the user state embedding (34) or the natural language description and based on the result of the classification determines the reward value (38) to be fed to the HMI agent (40).

6. The method of claim 5, wherein the reward model (36) is trained as
- a binary classification model that classifies the user state embedding (34) or the natural language description; or
- a score classification model that classifies the user state embedding (34) into a predetermined and at inference time fixed number of classes by determining a classification score of the user state embedding (34) for each of the classes, wherein the reward value (38) is based on at least one classification score.

7. The method of any of the preceding claims, wherein in step c) and/or in step d) the HMI agent (40) modifies the HMI device (18) by adding to, removing from, and/or changing of the HMI element, preferably a control element, of the user interface, wherein the HMI agent (40) determines the modification action based on a proximal policy optimization.

8. A computer-implemented method for training an HMI agent (40) and a reward model (36) before deployment in an HMI system (16), the method comprising:
a) providing a plurality of samples of multi-modal sensor data (30), each sample being indicative of a user state within the vehicle cabin (12);
b) training at least one sequence-to-text model or sample-to-text model to be suitable to determine a natural text description or an embedding thereof from the samples or a sequence of samples of multi-modal sensor data (30) provided in step a);
c) generating a natural language text label for each sample or sequence of samples with the models trained in step b), wherein the caption is descriptive of the respective samples or sequence of samples;
d) training a reward model (36) with supervised learning using the natural language text labels;
e) train the HMI agent (40) with reinforcement learning, wherein the reward model (36) determines the reward of the HMI agent (40) during reinforcement learning;
f) deploy the trained HMI agent and trained reward model to the HMI system (16).

9. A method for finetuning, preferably for personalizing to a specific user (14), an HMI agent (40) and a reward model (36) during deployment in an HMI system (16), the method comprising:
a) detecting and processing a user interaction (28) of the user with the HMI system (16) and associated multi-modal sensor data (30) about the user;
b) performing a method of any of the claims 1 to 7 with the HMI system (16) to determine the control signal (42) and storing the user interaction (28), multi-modal sensor data (30), and a modification action represented by the control signal (42);
c) if a predetermined update criterion is met, performing training of the reward model (36) based on the stored user interaction (28), the multi-modal sensor data (30), and the modification action to obtain an updated reward model, and perform reinforcement learning of the HMI agent (40) based on the updated reward model to obtain an updated HMI agent.

10. The method of claim 9, wherein
- steps a) and b) are carried out by a control unit (26), preferably an embedded control unit, of a vehicle (10), and step b) involves connecting the control unit (26) to a cloud server (44) via a communications network (46) and sending the data required for training to the cloud server (44);
- step c) is carried out by the cloud server (44) in response to and based on the data received from the control unit (26); and
d) the cloud server (44) transmits the updated reward model and the updated HMI agent to the control unit (26) via the communications network (46) to replace the reward model (36) and HMI agent (40).

11. The method of claim 9 or 10, wherein after obtaining the updated reward model and/or the updated HMI agent an integrity check is performed and, only if the integrity check is passed, the updated reward model and the HMI agent replace the previous ones.

12. An HMI system (16), preferably for a vehicle (10), the HMI system (16) comprising means to carry out a method of any of the preceding claims.

13. A vehicle (10) comprising an HMI system (16) of claim 12.

14. A computer program comprising instructions that, upon execution by a data processing device, cause the device to carry out a preferred method of any of the claims 1 to 11.

15. A machine readable data storage that has stored there on the computer program of claim 14.
